# EUROPÄISCHE PATENTSCHRIFT

(11) **EP 2 991 848 B1**
(45) Veröffentlichungstag und Bekanntmachung des Hinweises auf die Patenterteilung: **01.02.2017**
(21) Anmeldenummer: 14720903.5
(22) Anmeldetag: 30.04.2014
(51) Int. Cl.: B60K 15/035, F16H 57/027

(54) **BE- UND ENTLÜFTUNGSVORRICHTUNG**
VENTILATING DEVICE
DISPOSITIF D'AMENÉE ET D'ÉVACUATION D'AIR

(30) Priorität: 30.04.2013 DE 102013207971
(43) Veröffentlichungstag der Anmeldung: 09.03.2016
(73) Patentinhaber: Hydac Filtertechnik GmbH, 66280 Sulzbach/Saar (DE); ZF Friedrichshafen AG, 88046 Friedrichshafen (DE)
(72) Erfinder: KLEIN, Volkmar, 66482 Zweibrücken (DE); ALESCH, Klaus, 94107 Untergriesbach (DE); LENZ, Paul, 94065 Waldkirchen (DE)
(74) Vertreter: Bartels, Martin Erich Arthur
(86) Internationale Anmeldenummer: PCT/EP2014/001163
(87) Internationale Veröffentlichungsnummer: WO 2014/177280

(56) Entgegenhaltungen:
- DE-A1- 10 047 199
- DE-A1-102010 036 294
- DE-A1-102010 042 498

## Beschreibung

Die Erfindung bezieht sich auf eine Be- und Entlüftungsvorrichtung für einen Öl enthaltenden geschlossenen Behälter eines Kraftfahrzeugs, mit einer den Behälter mit der Atmosphäre verbindenden Leitung, die bei Volumenänderungen im Behälter einen Druckausgleich zur Umgebung ermöglicht, mit einem in der Leitung angeordneten Filtergehäuse, das von einer gasdurchlässigen und flüssigkeitsundurchlässigen Filtermembran unterteilt ist, wobei die Filtermembran einen Filtereinsatz bildend an einem in den Innenraum des Filtergehäuses lösbar einsetzbaren Rahmen angeordnet ist, dessen Querschnitt dem Querschnitt des Innenraums des Filtergehäuses entspricht und wobei ein erster Teil der Leitung von dem Behälter zu der einen Seite der Filtermembran und ein zweiter Teil der Leitung von der zweiten Seite der Filtermembran zur Umgebung führt.

Derartige Be- und Entlüftungsvorrichtungen dienen dazu Behälter wie z.B. Achsgehäuse in Kraftfahrzeugen zu be- und entlüften. Dazu ist es bekannt die Be- und Entlüftungsvorrichtung über eine Schlauchleitung mit dem zu entlüftenden Achsgehäuse zu verbinden, so dass die mit Ölpartikeln angereicherte Luft durch die Schlauchleitung zu einer gaspermeablen Filtermembran im Filtergehäuse geleitet wird. Dabei lässt die Filtermembran die Luft hindurch, weist aber das in der Luft enthaltende Öl ab, so dass dieses Öl über die Schlauchleitung wieder in das Achsgehäuse zurückfließt. Die durch die Filtermembran hindurchgetretene Luft gelangt über eine weitere Schlauchleitung nach außen in die Umgebung. Reduziert sich das Volumen des im Achsgehäuse enthaltenen und durch den Fahrbetrieb des Kraftfahrzeugs erwärmten Öls nach Beendigung des Fahrbetriebs wieder, so wird ein Unterdruck im Achsgehäuse dadurch vermieden, dass Luft von außen über die weitere Leitung in das Achsgehäuse gelangen kann. Feuchtigkeit oder Wasser sowie Schmutz, die dabei mit angesaugt werden können, werden durch die Filtermembran an einem Eindringen in das Achsgehäuse gehindert.

Da die Filtermembran eine glatte Oberfläche aufweist, ist es schwierig, die Filtermembran sicher im Gehäuse anzuordnen.

Die DE 10 2010 036 294 A1 beschreibt Be- und Entlüftungsvorrichtung für einen Öl enthaltenden geschlossenen Behälter eines Kraftfahrzeugs, mit einer den Behälter mit der Atmosphäre verbindenden Leitung, die bei Volumenänderungen im Behälter einen Druckausgleich zur Umgebung ermöglicht, mit einem in der Leitung angeordneten Filtergehäuse, das von einer gasdurchlässigen und flüssigkeitsundurchlässigen Filtermembran unterteilt ist, wobei die Filtermembran einen Filtereinsatz bildend an einem in den Innenraum des Filtergehäuses lösbar einsetzbaren Rahmen angeordnet ist, dessen Querschnitt dem Querschnitt des Innenraums des Filtergehäuses entspricht und wobei ein erster Teil der Leitung von dem Behälter zu der einen Seite der Filtermembran und ein zweiter Teil der Leitung von der zweiten Seite der Filtermembran zur Umgebung führt.

Aufgabe der Erfindung ist es daher eine Be- und Entlüftungsvorrichtung der eingangs genannten Art zu schaffen, bei der bei einfachem Aufbau die Filtermembran sicher im Filtergehäuse anordenbar ist.

Diese Aufgabe wird erfindungsgemäß dadurch gelöst, dass der eine axiale Durchgangsöffnung aufweisende Rahmen einen radial umlaufenden Ringraum mit einer nach außen führenden Ringöffnung aufweist, der von einem aushärtbaren Kleber gefüllt ist und in den über die Ringöffnung die Filtermembran mit ihrem radial umlaufenden Randbereich hineinragt.

Durch diese Ausbildung ist die Filtermembran sicher an dem Rahmen befestigt und kann mit dem Rahmen eine Einheit bildend leicht in das Filtergehäuse eingebaut werden. Dabei wird die Filtermembran mit ihrem radial umlaufenden Randbereich in den Ringraum mit dem noch nicht ausgehärteten Kleber eingeführt und ist nach Aushärten des Klebers fest am Rahmen gehalten.

Der Behälter kann z.B. ein Achsgehäuse oder ein Getriebegehäuse sein.

Besonders fest ist die Verbindung der Filtermembran mit dem Rahmen, wenn der in den Ringraum ragende Randbereich der Filtermembran annähernd axial gerichtet ist.

Einfach herstellbar ist die Einheit aus Filtermembran und Rahmen, wenn der Rahmen aus zwei axial einander zugeordneten und miteinander verbundenen ringförmigen Rahmenteilen besteht, wobei das erste der Rahmenteile eine radial umlaufende, zum zweiten der Rahmenteile hin axial offene Ringnut aufweist, in die ein Ringansatz des zweiten Rahmenteils eingesetzt ist, mit einem bei in die Ringnut des ersten Rahmenteils eingesetzten Ringansatz des zweiten Rahmenteils in der Ringnut verbleibendem Ringraum, der über einen Ringschlitz zwischen Ringnut und Ringansatz mit der Durchgangsöffnung des Rahmens verbunden ist, wobei die Filtermembran mit ihrem radial umlaufenden Randbereich durch den Ringschlitz in den von dem ausgehärteten Kleber gefüllten Ringraum ragt.

Zu einem einfachen konzentrischen Zusammenbau der beiden Rahmenteile kann der Ringansatz des zweiten Rahmenteils mit einer äußeren radial umlaufenden Mantelfläche an der radial äußeren Nutwand der Ringnut geführt sein.

Zur sicheren Trennung des Innenraums des Filtergehäuses durch die Filtermembran kann an der äußeren radial umlaufenden Mantelfläche eines der Rahmenteile eine radial umlaufende Nut ausgebildet sein, in die ein an der Innenwand des Filtergehäuses anliegender Dichtring eingesetzt ist.

Der mit der Filtermembran versehene Rahmen kann eine austauschbare Filtereinheit bilden, die bei nicht mehr ausreichend luftdurchlässiger Filtermembran ausgetauscht werden kann.

Zu einem leichten Austausch der Filtereinheit kann der Rahmen ein axial hervorstehendes Griffteil aufweisen, das vorzugsweise koaxial von der Filtereinheit hervorsteht.

Ist auf einer oder zu beiden Seiten der Filtermembran eine eine Auslenkung der Filtermembran quer zu ihrer Ebene begrenzende Stützeinrichtung angeordnet, so wird durch die Stützeinrichtung, die zumindest annähernd in Anlage an der Filtermembran ist, eine Verformung der Filtermembran aufgrund ihrer Druck- bzw. Unterdruckbeaufschlagung begrenzt. Damit kommt es zu keiner oder zu keiner wesentlichen plastischen Verformung und die Filtermembran vergrößert ihre Membranfläche nur bis zur Anlage an der Stützeinrichtung. Eine Beschädigung der Filtermembran wird damit vermieden und ein weitgehend störungsfreies Belüften und Entlüften des Behälters gewährleistet.

Um möglichst wenig der Membranfläche der Filtermembran durch die Stützeinrichtung abzudecken und somit die Membranfläche möglichst weitgehend einem Be- und Entlüften zur Verfügung zu stellen, können die Stützeinrichtungen Drahtgitter sein.

Vorzugsweise sind dabei auch die Stützeinrichtungen an dem Rahmen angeordnet.

Zur leichten Öffenbarkeit des Filtergehäuses bei einem Austausch der Filtereinheit kann das Filtergehäuse aus zwei topfartigen Gehäuseteilen bestehen, die, ihre Topföffnungen einander zugewandt, miteinander verbindbar sind.

Dazu kann die Außenkontur des einen Gehäuseteils der Innenkontur des anderen Gehäuseteils entsprechen und das erste Gehäuseteil in den Innenraum des zweiten Gehäuseteils einschiebbar und die beiden Gehäuseteile miteinander verbindbar sein.

Ist dabei die Filtereinheit mit ihrem Rahmen zwischen den Böden der beiden Gehäuseteile eingespannt, sind keine Halteelemente für die Filtereinheit erforderlich, wodurch sich ein einfacher Aufbau der Be- und Entlüftungsvorrichtung ergibt.

Zu einer Reduzierung an Bauteilen und damit einer Vereinfachung der Lagerhaltung führt es, wenn die beiden Gehäuseteile mittels einer oder mehrerer Rasteinrichtungen miteinander verbindbar sind.

Ist das Filtergehäuse mit annähernd senkrechter Ebene der Filtermembran an dem Kraftfahrzeug anordenbar und münden der erste Teil und/oder der zweite Teil der Leitung in den unteren Bereich des Filtergehäuses, so können Öl und feuchte Verschmutzungen von der Filtermembran nach unten abtropfen und über die jeweilige Leitung ablaufen. Ein Zusetzen der Filtermembran und damit deren frühzeitiger Austauschbedarf wird vermieden.

Eine einfache Montage der Be-.und Entlüftungsvorrichtung wird dadurch ermöglicht, dass das Filtergehäuse einen ersten Anschlussstutzen zum Anschließen eines zum Behälter führenden ersten Schlauchs und/oder einen zweiten Anschlussstutzen zum Anschließen eines in die Umwelt mündenden zweiten Schlauchs aufweist.

Damit können auch bei schwieriger Einbauumgebung der Be- und Entlüftungsvorrichtung zunächst das Filtergehäuse und anschließend die Schläuche leicht montiert werden.

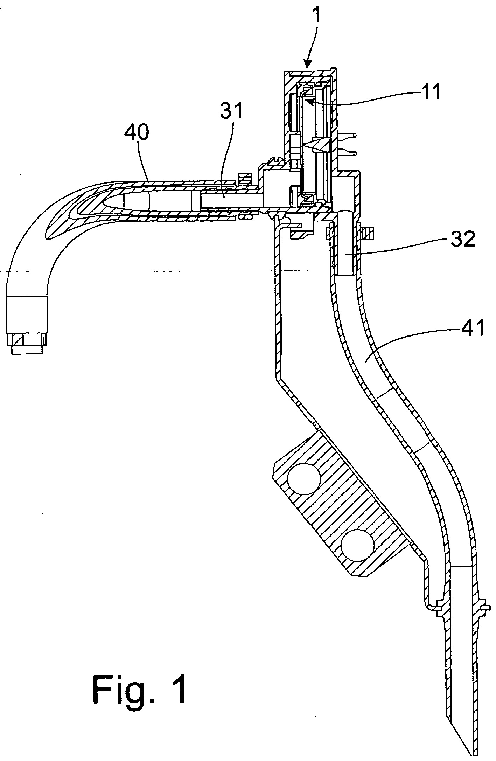

Ein Ausführungsbeispiel der Erfindung ist in der Zeichnung dargestellt und wird im Folgenden näher beschrieben. Es zeigen
- Fig. 1: eine Seitenansicht einer Be- und Entlüftungsvorrichtung mit Anschlüssen im Querschnitt;

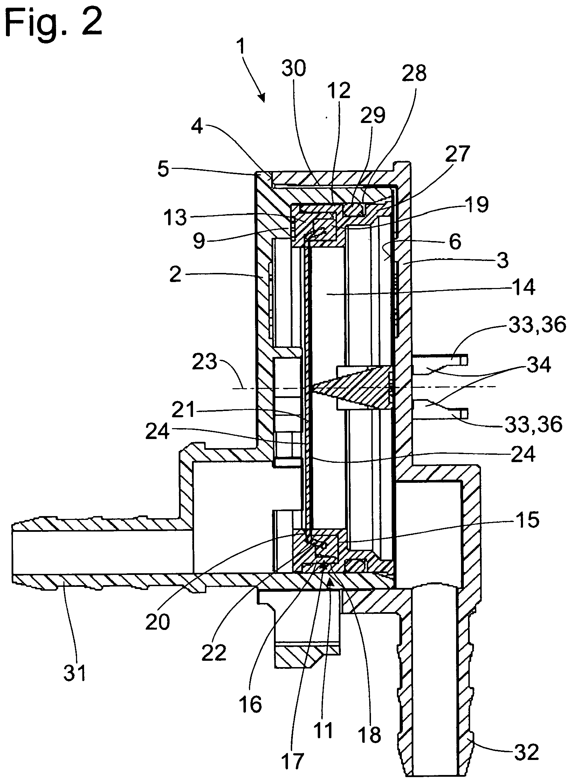

- Fig. 2: eine vergrößerte Darstellung der Be- und Entlüftungsvorrichtung nach Figur 1;

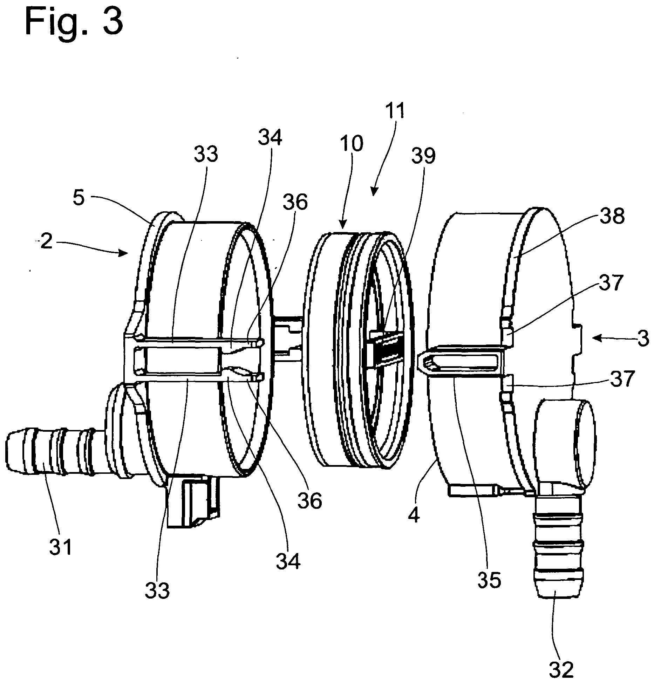

- Fig. 3: eine Explosionsdarstellung der Be- und Entlüftungsvorrichtung nach Fig. 1; und

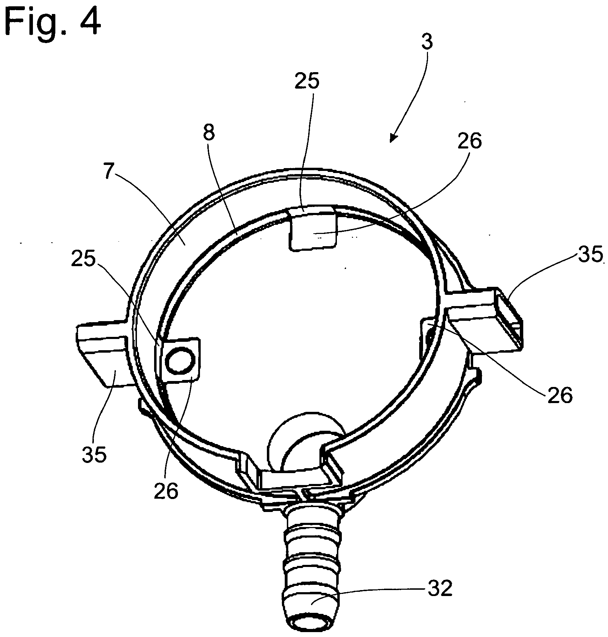

- Fig. 4: eine perspektivische Darstellung des zweiten Gehäuseteils der Be- und Entlüftungsvorrichtung nach Fig. 1.

Die dargestellte Be- und Entlüftungsvorrichtung für ein Achsgehäuse runden Querschnitts eines Kraftfahrzeugs weist ein Filtergehäuse 1 auf, das aus einem topfartigen ersten Gehäuseteil 2 und einem topfartigen zweiten Gehäuseteil 3 besteht. Die zylindrische Außenkontur des ersten Gehäuseteils 2 entspricht mit gering größerem Durchmesser der Innenkontur des zweiten Gehäuseteils 3.

Mit ihren Topföffnungen einander zugewandt ist das erste Gehäuseteil 2 in das zweite Gehäuseteil 3 einführbar, bis das zweite Gehäuseteil 3 mit seiner Stirnseite 4 an einem flanschartigen Anschlag 5 des ersten Gehäuseteils 2 zur Anlage kommt.

Anschließend an den Boden 6 des zweiten Gehäuseteils 3 weist dieses an seiner Innenwand 7 einen radial umlaufenden Ringansatz 8 auf, dessen Durchmesser dem Durchmesser der zylindrischen Außenkontur des ersten Gehäuseteils 2 entspricht und dieses bei in das zweite Gehäuseteil 3 vollständig eingeführter Position konzentrisch zum zweiten Gehäuse 3 positioniert.

Der Boden des ersten Gehäuseteils 2 besitzt in seinem radial äußeren Bereich eine Ringstufe 9, an der ein eine Durchgangsöffnung 14 aufweisender ringförmiger Rahmen 10 einer Filtereinheit 11 axial abgestützt ist.

Der Rahmen 10 besteht aus einem ringförmigen ersten Rahmenteil 12 und einem dazu koaxialen ringförmigen zweiten Rahmenteil 13.

Das erste Rahmenteil 13 weist an seinem an der Ringstufe 9 anliegenden Ende einem dem Innendurchmesser des ersten Gehäuseteils 2 entsprechenden Außendurchmesser auf.

Das erste Rahmenteil 12 weist eine radial umlaufende, zur Seite des zweiten Rahmenteils 13 offene Ringnut 15 auf, in die ein Ringansatz 16 des zweiten Rahmenteils 13 hineinragt und mit seiner äußeren radial umlaufenden Mantelfläche 17 an der radial äußeren Nutenwand 18 der Ringnut 15 geführt ist.

Bei in die Ringnut 15 eingeführtem Ringansatz 16 verbleibt ein Ringraum 19 in der Ringnut 15, der am Mündungsbereich der Ringnut 15 über einen Ringschlitz 20 mit der Durchgangsöffnung 14 verbunden ist.

Eine gasdurchlässige aber flüssigkeitsundurchlässige Filtermembran 21 verschließt die Durchgangsöffnung 14 und ragt mit ihrem radial umlaufenden Randbereich 22 durch den Ringschlitz in den Ringraum 19, wobei der in den Ringraum 19 ragende Teil des Randbereichs 22 abgebogen ist und sich annähernd koaxial zur Längsachse 23 von Filtergehäuse 1 und Durchgangsöffnung 14 erstreckt. Bei der Montage der Filtereinheit 11 wurde der Ringraum 19 mit einem aushärtbaren Kleber gefüllt, dann der Randbereich 22 der die Durchgangsöffnung 14 verschließenden Filtermembran 21 in den Ringraum 19 eingeführt und die beiden Rahmenteile 12 und 13 zusammengesteckt. Durch den dann ausgehärteten Kleber im Ringraum 19 ist die Filtermembran 21 fest mit dem Rahmen 10 und auch die Rahmenteile 12 und 13 fest miteinander verbunden.

Zu beiden Seiten der Filtermembran 21 ist jeweils ein Drahtgitter 24 angeordnet, wobei beide Drahtgitter 24 mit ihrem radial umlaufenden Randbereich in den Ringschlitz 20 ragen und so mit dem Rahmen 10 verbunden sind. Durch die Drahtgitter 24 ist die Filtermembran 21 daran gehindert axial auszulenken.

Das erste Rahmenteil 12 weist einen sich koaxial zum zweiten Gehäuseteil 3 hin erstreckenden Rohransatz 27 auf, der mit seiner radial umlaufenden Mantelfläche an der Innenwand des ersten Gehäuseteils 2 geführt und mit seiner Stirnseite am Boden 6 abgestützt ist.

An der Mantelfläche des Rohransatzes 27 ist eine radial umlaufende Nut 28 ausgebildet, in die ein Dichtring 29 eingesetzt ist, der mit Vorspannung an der Innenwand des ersten Gehäuseteils 2 in Anlage ist.

Der Ringansatz 8 ist an drei um jeweils 90° versetzten Stellen durch Unterbrechungen 25 unterbrochen, wobei sich die Unterbrechungen 25 bis in den Boden 6 hinein und dort um eine Vertiefung 26 radial nach innen erstrecken.

Über die Vertiefungen 26, die Unterbrechungen 25, den Ringspalt 30 zwischen erstem Gehäuse 2 und zweitem Gehäuse 3 sowie der Stirnseite 4 und dem Anschlag 5 ist ein Notentlüftungskanal gebildet.

Das Filtergehäuse 1 ist in seiner Einbaulage am Kraftfahrzeug dargestellt. Dabei befindet sich die Filtermembran 21 mit ihrer Ebene in einer senkrechten Ausrichtung.

Der Innenraum des ersten Gehäuseteils 2 des Filtergehäuses 1 auf der linken Seite der Filtermembran 21 ist in seinem unteren Bereich mit einem ersten Anschlussstutzen 31 versehen, an den ein Schlauch 40 anschließbar ist, der zum Inneren eines nicht dargestellten Achsgehäuses führt.

Dem ersten Anschlußstutzen 31 koaxial gegenüberliegend in den Innenraum des zweiten Gehäuseteils 3 einmündend besitzt das zweite Gehäuseteil 3 einen zweiten Anschlussstutzen 32, der nach unten gerichtet ist und an den ein zweiter Schlauch 41 anschließbar ist, der mit seinem freien Ende in die Umgebung mündet.

Zum Zusammenbau der Be- und Entlüftungsvorrichtung wird zunächst die austauschbare Filtereinheit 11 in das erste Gehäuseteil 2 eingesetzt und dann das zweite Gehäuseteil 3 auf das erste Gehäuseteil 2 bis zur Anlage am Anschlag 5 aufgeschoben.

Auf jeder Seite des ersten Gehäuseteils 2 sind außen jeweils zwei parallel im Abstand zueinander sich axial erstreckende Rastarme 33 vorhanden, die mit ihrem einen Ende an dem anschlagseitigen Ende des ersten Gehäuseteils 2 befestigt sind und an ihren freien Enden einander zugewandte Rasten 34 aufweisen.

Das zweite Gehäuseteil 3 weist entsprechend den Paaren von Rastarmen 33 sich axial erstreckende Rastnocken 35 auf, an denen beim Zusammenfügen der Gehäuseteile 2 und 3 federnd voneinander weggespreizt entlanggleiten und beim Erreichen des Endes der Rastnocken 35 diese hintergreifen und so die Gehäuseteile 2 und 3 zusammen halten. Die freien Enden 36 der Rastarme 33 werden in der zusammengefügten Position der Gehäuseteile 2 und 3 in Ausnehmungen 37 am zweiten Gehäuseteil 3 eingeführt, die ein selbsttätiges Herausbewegen der Rastnocken 35 aus ihrer Hintergreifposition verhindern. Die Ausnehmungen 37 sind an einem radial flanschartig hervorstehenden Ansatz 38 des zweiten Gehäuseteils 3 ausgebildet.

Um die Filtereinheit 11 zwecks eines Austauschs leicht wieder aus dem ersten Gehäuseteil 2 des geöffneten Filtergehäuses 1 herausziehen zu können, ist an dem ersten Rahmenteil 12 ein von der Filtermembran weggerichtetes, axial hervorstehendes Griffteil 39 angeordnet.

### Bezugszeichen

- 1: Filtergehäuse
- 2: erstes Gehäuseteil
- 3: zweites Gehäuseteil
- 4: Stirnseite
- 5: Anschlag
- 6: Boden
- 7: Innenwand
- 8: Ringansatz
- 9: Ringstufe
- 10: Rahmen
- 11: Filtereinheit
- 12: erstes Rahmenteil
- 13: zweites Rahmenteil
- 14: Durchgangsöffnung
- 15: Ringnut
- 16: Ringansatz
- 17: Mantelfläche
- 18: äußere Nutenwand
- 19: Ringraum
- 20: Ringschlitz
- 21: Filtermembran
- 22: Randbereich
- 23: Längsachse
- 24: Drahtgitter
- 25: Unterbrechungen
- 26: Vertiefung
- 27: Rohransatz
- 28: Nut
- 29: Dichtring
- 30: Ringspalt
- 31: erster Anschlussstutzen
- 32: zweiter Anschlussstutzen
- 33: Rastarme
- 34: Rasten
- 35: Rastnocken
- 36: freie enden
- 37: Ausnehmungen
- 38: Ansatz
- 39: Griffteil
- 40: erster Schlauch
- 41: zweiter Schlauch

## Patentansprüche

1. Be- und Entlüftungsvorrichtung für einen Öl enthaltenden geschlossenen Behälter eines Kraftfahrzeugs, mit einer den Behälter mit der Atmosphäre verbindenden Leitung, die bei Volumenänderungen im Behälter einen Druckausgleich zur Umgebung ermöglicht, mit einem in der Leitung angeordneten Filtergehäuse (1), das von einer gasdurchlässigen und flüssigkeitsundurchlässigen Filtermembran (21) unterteilt ist, wobei die Filtermembran (21) einen Filtereinsatz (11) bildend an einem in den Innenraum des Filtergehäuses (1) lösbar einsetzbaren Rahmen (10) angeordnet ist, dessen Querschnitt dem Querschnitt des Innenraums des Filtergehäuses (1) entspricht und wobei ein erster Teil der Leitung von dem Behälter zu der einen Seite der Filtermembran (21) und ein zweiter Teil der Leitung von der zweiten Seite der Filtermembran (21) zur Umgebung führt, **dadurch gekennzeichnet, dass** der eine axiale Durchgangsöffnung (14) aufweisende Rahmen (10) einen radial umlaufenden Ringraum (19) mit einer nach außen führenden Ringöffnung aufweist, der von einem aushärtbaren Kleber gefüllt ist und in den über die Ringöffnung die Filtermembran (21) mit ihrem radial umlaufenden Randbereich (22) hineinragt.

2. Be- und Entlüftungsvorrichtung nach Anspruch 1, **dadurch gekennzeichnet, dass** der in den Ringraum (19) ragende Randbereich (22) der Filtermembran (21) annähernd axial gerichtet ist.

3. Be- und Entlüftungsvorrichtung nach einem der vorhergehenden Ansprüche, **dadurch gekennzeichnet, dass** der Rahmen (10) aus zwei axial einander zugeordneten und miteinander verbundenen ringförmigen Rahmenteilen (12, 13) besteht, wobei das erste der Rahmenteile (13) eine radial umlaufende, zum zweiten der Rahmenteile (12) hin axial offene Ringnut (15) aufweist, in die ein Ringansatz (16) des zweiten Rahmenteils (12) eingesetzt ist, mit einem bei in die Ringnut (15) des ersten Rahmenteils (13) eingesetzten Ringansatz (16) des zweiten Rahmenteils (12) in der Ringnut (15) verbleibendem Ringraum (19), der über einen Ringschlitz (20) zwischen Ringnut (15) und Ringansatz (16) mit der Durchgangsöffnung (14) des Rahmens (10) verbunden ist, wobei die Filtermembran (21) mit ihrem radial umlaufenden Randbereich (22) durch den Ringschlitz (20) in den von dem ausgehärteten Kleber gefüllten Ringraum (19) ragt.

4. Be- und Entlüftungsvorrichtung nach Anspruch 3, **dadurch gekennzeichnet, dass** der Ringansatz (16) des zweiten Rahmenteils (12) mit einer äußeren radial umlaufenden Mantelfläche (17) an der radial äußeren Nutwand (18) der Ringnut (15) geführt ist.

5. Be- und Entlüftungsvorrichtung nach Anspruch 3 oder 4, **dadurch gekennzeichnet, dass** an der äußeren radial umlaufenden Mantelfläche eines der Rahmenteile (13) eine radial umlaufende Nut (28) ausgebildet ist, in die ein an der Innenwand des Filtergehäuses (1) anliegender Dichtring (29) eingesetzt ist.

6. Be- und Entlüftungsvorrichtung nach einem der Ansprüche 4 und 5, **dadurch gekennzeichnet, dass** der mit der Filtermembran (21) versehene Rahmen (10) eine austauschbare Filtereinheit (11) bildet.

7. Be- und Entlüftungsvorrichtung nach einem der vorhergehenden Ansprüche, **dadurch gekennzeichnet, dass** der Rahmen (10) ein axial hervorstehendes Griffteil (39) aufweist.

8. Be- und Entlüftungsvorrichtung nach einem der vorhergehenden Ansprüche, **dadurch gekennzeichnet, dass** auf einer oder zu beiden Seiten der Filtermembran (21) eine eine Auslenkung der Filtermembran (21) quer zu ihrer Ebene begrenzende Stützeinrichtung angeordnet ist.

9. Be- und Entlüftungsvorrichtung nach Anspruch 8, **dadurch gekennzeichnet, dass** die Stützeinrichtungen Drahtgitter (24) sind.

10. Be- und Entlüftungsvorrichtung nach Anspruch 8 oder 9, **dadurch gekennzeichnet, dass** die Stützeinrichtungen an dem Rahmen (10) angeordnet sind.

11. Be- und Entlüftungsvorrichtung nach einem der vorhergehenden Ansprüche, **dadurch gekennzeichnet, dass** das Filtergehäuse (1) aus zwei topfartigen Gehäuseteilen (2, 3) besteht, die ihre Topföffnungen einander zugewandt miteinander verbindbar sind.

12. Be- und Entlüftungsvorrichtung nach Anspruch 11, **dadurch gekennzeichnet, dass** die Außenkontur des einen Gehäuseteils (2) der Innenkontur des anderen Gehäuseteils (3) entspricht und das erste Gehäuseteil (2) in den Innenraum des zweiten Gehäuseteils (3) einschiebbar ist und die beiden Gehäuseteile (2, 3) miteinander verbindbar sind.

13. Be- und Entlüftungsvorrichtung nach Anspruch 12, **dadurch gekennzeichnet, dass** die Filtereinheit (11) mit ihrem Rahmen (10) zwischen den Böden (6) der beiden Gehäuseteile (2, 3) eingespannt ist.

14. Be- und Entlüftungsvorrichtung nach einem der Ansprüche 12 und 13, **dadurch gekennzeichnet, dass** die beiden Gehäuseteile (2, 3) mittels einer oder mehrerer Rasteinrichtungen miteinander verbindbar sind.

15. Be- und Entlüftungsvorrichtung nach einem der vorhergehenden Ansprüche, **dadurch gekennzeichnet, dass** das Filtergehäuse (1) mit annähernd senkrechter Ebene der Filtermembran (21) an dem Kraftfahrzeug anordenbar ist und der erste Teil und/oder der zweite Teil der Leitung in den unteren Bereich des Filtergehäuses (1) münden.

16. Be- und Entlüftungsvorrichtung nach einem der vorhergehenden Ansprüche, **dadurch gekennzeichnet, dass** das Filtergehäuse (1) einen ersten Anschlussstutzen (31) zum Anschließen eines zum Behälter führenden ersten Schlauchs (40) und/oder einen zweiten Anschlussstutzen (32) zum Anschließen eines in die Umwelt mündenden zweiten Schlauchs (41) aufweist.

## Claims

1. A ventilating device for a closed container that contains oil of a motor vehicle, comprising a conduit connecting the container to the atmosphere, and which enables equalisation of pressure to the environment when there are volume changes in the container, comprising a filter housing (1) disposed in the conduit and which is sub-divided by a gas-permeable and fluid-impermeable filter membrane (21), the filter membrane (21) forming a filter insert (11) being disposed on a frame (10) that can be releaseably inserted into the interior of the filter housing (1) and of which the cross-section corresponds to the cross-section of the interior of the filter housing (1), and a first part of the conduit leading from the container to one side of the filter membrane (21), and a second part of the conduit leading from the second side of the filter membrane (21) to the environment, **characterised in that** the frame (10) that has an axial through opening (14) comprises a radially circumferential annular space (19) that has an annular opening that leads outwards, which annular space is filled with a curable adhesive, and into which the filter membrane (21) with its radially circumferential edge region (22) protrudes via the annular opening.

2. The ventilating device according to Claim 1, **characterised in that** the edge region (22) of the filter membrane (21) projecting into the annular space (19) is orientated almost axially.

3. The ventilating device according to any of the preceding claims, **characterised in that** the frame (10) is made up of two annular frame parts (12, 13) that are assigned to one another axially and are connected to one another, the first of the frame parts (13) having a radially circumferential annular groove (15) that is axially open towards the second of the frame parts (12) and into which an annular extension (16) of the second frame part (12) is inserted, with an annular space (19) remaining in the annular groove (15) when an annular extension (16) of the second frame part (12) is inserted into the annular groove (15) of the first frame part (13), which annular space is connected by means of an annular slot (20) between the annular groove (15) and the annular extension (16) to the through opening (14) of the frame (10), the filter membrane (21) projecting with its radially circumferential edge region (22) through the annular slot (20) into the annular space (19) filled by the cured adhesive.

4. The ventilating device according to Claim 3, **characterised in that** the annular extension (16) of the second frame part (12) is guided by an outer radially circumferential lateral surface (17) along the radially outer groove wall (18) of the annular groove (15).

5. The ventilating device according to Claim 3 or 4, **characterised in that** there is formed on the outer radially circumferential lateral surface of one of the frame parts (13) a radially circumferential groove (28) into which a sealing ring (29) resting against the inner wall of the filter housing (1) is inserted.

6. The ventilating device according to either of Claims 4 and 5, **characterised in that** the frame (10) provided with the filter membrane (21) forms a changeable filter unit (11).

7. The ventilating device according to any of the preceding claims, **characterised in that** the frame (10) has an axially protruding handle part (39).

8. The ventilating device according to any of the preceding claims, **characterised in that** a supporting device limiting deflection of the filter membrane (21) transversely to its plane is disposed on one or on both sides of the filter membrane (21).

9. The ventilating device according to Claim 8, **characterised in that** the supporting devices are wire gratings (24).

10. The ventilating device according to Claim 8 or 9, **characterised in that** the supporting devices are disposed on the frame (10).

11. The ventilating device according to any of the preceding claims, **characterised in that** the filter housing (1) is made of two pot-like housing parts (2, 3) which, with their pot openings facing one another, can be connected to one another.

12. The ventilating device according to Claim 11, **characterised in that** the outer contour of the one housing part (2) corresponds to the inner contour of the other housing part (3), and the first housing part (2) can be pushed into the interior of the second housing part (3), and the two housing parts (2, 3) can be connected to one another.

13. The ventilating device according to Claim 12, **characterised in that** the filter unit (11) is clamped with its frame (10) between the bottoms (6) of the two housing parts (2, 3).

14. The ventilating device according to either of Claims 12 and 13, **characterised in that** the two housing parts (2, 3) can be connected to one another by means of one or more detent devices.

15. The ventilating device according to any of the preceding claims, **characterised in that** the filter housing (1) can be disposed on the motor vehicle with an approximately perpendicular plane of the filter membrane (21), and the first part and/or the second part of the conduit open out into the lower region of the filter housing (1).

16. The ventilating device according to any of the preceding claims, **characterised in that** the filter housing (1) has a first connecting piece (31) for connecting a first hose (40) leading to the container and/or a second connecting piece (32) for connecting a second hose (41) opening out into the environment.

## Revendications

1. Dispositif d'apport et d'évacuation d'air pour un réservoir fermé et contenant de l'essence d'un véhicule automobile, comprenant un conduit mettant le réservoir en communication avec l'atmosphère et permettant, s'il se produit des variations de volume dans le réservoir, une compensation de la pression par rapport à l'atmosphère comprenant un boîtier (1) de filtre qui est monté dans le conduit et qui est subdivisé par une membrane (21) de filtre perméable au gaz et imperméable au liquide, la membrane (21) de filtre étant disposée, en formant un élément filtrant, sur un cadre (10) qui peut être inséré de manière amovible dans l'espace intérieur du boîtier (1) de filtre et dont la section transversale correspond à la section transversale de l'espace intérieur du boîtier (1) de filtre et dans lequel une première partie du conduit va du réservoir à l'un des côtés de la membrane (21) de filtre et une deuxième partie du conduit du deuxième côté de la membrane (21) de filtre à l'atmosphère, **caractérisé en ce que** le cadre (10) ayant une ouverture (14) de traversée axiale à un espace (19) annulaire faisant le tour radialement et ayant une ouverture annulaire menant à l'extérieur, espace annulaire qui est rempli d'une colle durcissable et dans lequel, par l'ouverture annulaire, la membrane (21) de filtre pénètre par sa partie (22) de bord faisant le tour radialement.

2. Dispositif d'apport et d'évacuation d'air suivant la revendication 1, **caractérisé en ce que** la partie (22) de bord pénétrant dans l'espace (19) annulaire de la membrane (21) de filtre est dirigée à peu près axialement.

3. Dispositif d'apport et d'évacuation d'air suivant l'une des revendications précédentes, **caractérisé en ce que** le cadre (10) est constitué de deux parties (12, 13) de cadre de forme annulaire associées axialement l'une à l'autre et reliées entre elles, la première partie (13) du cadre ayant une rainure (15) annulaire qui fait le tour radialement, qui est ouverte axialement vers la deuxième partie (12) du cadre et dans laquelle est insérée un prolongement (16) annulaire de la deuxième partie (12) du cadre, comprenant un espace (19) annulaire qui subsiste dans la rainure (15) annulaire lorsque l'épaulement (16) annulaire de la deuxième partie (12) du cadre est inséré dans la rainure (15) annulaire de la première partie (13) du cadre, espace (19) annulaire qui, par une fente (20) annulaire entre la rainure (15) annulaire et l'épaulement (16) annulaire, communique avec l'ouverture (14) de traversée du cadre (10), la membrane (21) de filtre pénétrant par sa partie (22) de bord faisant le tour radialement, en passant par la fente (20) annulaire, dans l'espace (19) annulaire empli de la colle durcie.

4. Dispositif d'apport et d'évacuation d'air suivant la revendication 3, **caractérisé en ce que** l'épaulement(16) annulaire de la deuxième partie (12) du cadre est guidé, par une surface (17) latérale extérieure faisant le tour radialement, sur la paroi (18) extérieure radialement de la rainure (15) annulaire.

5. Dispositif d'apport et d'évacuation d'air suivant l'une des revendications 3 ou 4, **caractérisé en ce qu'**il est constitué sur la surface latérale extérieure faisant le tour radialement de l'une des parties (13) du cadre, une rainure (28) faisant le tour radialement dans laquelle est insérée un joint (29) torique s'appliquant à la paroi intérieure du boîtier (1) de filtre.

6. Dispositif d'apport et d'évacuation d'air suivant l'une des revendications 4 et 5, **caractérisé en ce que** le cadre (10) pourvu de la membrane (21) de filtre forme une unité (21)de filtration échangeable.

7. Dispositif d'apport et d'évacuation d'air suivant l'une des revendications précédentes, **caractérisé en ce que** le cadre (10) a une partie (39) de poignée en saillie axialement.

8. Dispositif d'apport et d'évacuation d'air suivant l'une des revendications précédentes, **caractérisé en ce que** d'un côté ou des deux côtés de la membrane (21) de filtre est monté un dispositif d'appui, limitant une excursion de la membrane (21) de filtre transversalement à son plan.

9. Dispositif d'apport et d'évacuation d'air suivant la revendication 8, **caractérisé en ce que** les dispositifs d'appui sont des grilles (24) de fil métallique.

10. Dispositif d'apport et d'évacuation d'air suivant l'une des revendications 8 ou 9, **caractérisé en ce que** les dispositifs d'appui sont montés sur le cadre (10).

11. Dispositif d'apport et d'évacuation d'air suivant l'une des revendications précédentes, **caractérisé en ce que** le boîtier (1) de filtre est constitué de deux parties (2, 3) d'un boîtier de type en pot, qui peuvent être reliées entre elles en ayant leur ouverture de pot tournées l'une vers l'autre.

12. Dispositif d'apport et d'évacuation d'air suivant la revendication 11, **caractérisé en ce que** le contour extérieur de l'une des parties (2) du boîtier correspond au contour intérieur de l'autre partie (3) du boîtier et la première partie (2) du boîtier peut être introduite dans l'espace intérieur de la deuxième partie (3) du boîtier et les deux parties (2, 3) du boîtier peuvent être reliées entre elles.

13. Dispositif d'apport et d'évacuation d'air suivant la revendication 12, **caractérisé en ce que** l'unité (11) de filtration est serrée par son cadre (10) entre les fonds (6) des deux parties (2, 3) du boîtier.

14. Dispositif d'apport et d'évacuation d'air suivant l'une des revendications 12 et 13, **caractérisé en ce que** les deux parties (2, 3) du boîtier peuvent être reliées l'une à l'autre au moyen d'un ou de plusieurs dispositifs d'encliquetage.

15. Dispositif d'apport et d'évacuation d'air suivant l'une des revendications précédentes, **caractérisé en ce que** le boîtier (1) de filtre peut être mis sur le véhicule automobile en ayant un plan à peu près vertical de la membrane (21) de filtre et la première partie et/ou la deuxième partie du conduit débouche dans la région inférieure du boîtier (1) de filtre.

16. Dispositif d'apport et d'évacuation d'air suivant l'une des revendications précédentes, **caractérisé en ce que** le boîtier (1) de filtre a une première tubulure (31) de raccordement pour raccorder un premier tuyau (40) souple menant au réservoir et/ou une deuxième tubulure (32) de raccordement pour raccorder un deuxième tuyau (41) souple débouchant à l'atmosphère.
